# EUROPEAN PATENT SPECIFICATION

(11) **EP 3 667 764 B1**
(45) Date of publication and mention of the grant of the patent: **16.12.2020**
(21) Application number: 19176971.0
(22) Date of filing: 28.05.2019
(51) Int. Cl.: H01M 2/10

(54) **BATTERY MODULE**
BATTERIEMODUL
MODULE DE BATTERIE

(30) Priority: 13.12.2018 CN 201811526885
(43) Date of publication of application: 17.06.2020
(60) Divisional application: 20207280.7
(73) Proprietor: Contemporary Amperex Technology Co., Limited, Fujian PRC 352100 (CN)
(72) Inventor: CHEN, Sien, Jiaocheng District Ningde City Fujian 352100 (CN); XU, Shoujiang, Jiaocheng District Ningde City Fujian 352100 (CN); FENG, Chunyan, Jiaocheng District Ningde City Fujian 352100 (CN); DAI, Xiaoshan, Jiaocheng District Ningde City Fujian 352100 (CN)
(74) Representative: Valea AB

(56) References cited:
- GB-A- 2 543 087
- US-A1- 2015 311 486
- US-A1- 2017 062 782
- US-A1- 2017 214 011
- US-A1- 2018 145 294

## Description

### TECHNICAL FIELD

The present disclosure relates to a technical filed of energy storage device, and particularly to a battery module.

### BACKGROUND

With the development of technology, secondary batteries have become more and more widely used in production or living fields. As the secondary battery, a pouch-type battery has advantages such as good safety performance, high energy density, light weight, large capacity, small internal resistance and flexible design, and thus is widely used.

In the prior art, when forming a battery module by the secondary batteries (pouch-type batteries), if directly pushing a plurality of secondary batteries stacked one on another into the case, outer surfaces of the secondary batteries will be worn. In order to effectively avoid the wear of the secondary batteries, a split outer frame cooperated with a unit frame is generally used when grouping the secondary batteries. Such solution can reduce the worn rate of the secondary batteries when the secondary batteries are assembled into the battery module, but it brings complicated operation process and accordingly reduces a grouping efficiency.

Therefore, there is a need of a novel battery module.

Patent document US2017/062782A1 discloses a rechargeable battery pack including unit cells each including a rechargeable battery, barriers coupled to each other at an outer circumference of the unit cells and each located between respective ones of the unit cells, and a pack housing that accommodates the unit cells and the barriers, and that is coupled to the barriers by tight-fitting.

Patent document GB2543087A discloses a battery pack includes a core pack and a housing having a sloped or curved inner surface. The core pack includes a pair of counteracting wedge elements slidable from a first configuration in which the core pack is insertable into the housing to a second configuration in which the wedge elements press against the core pack and the inner surface of the housing, thus fixing the core pack in the housing. The wedge elements may be moved relative to each other using a pair of counteracting elements which have surfaces which mate with surfaces on the wedge elements.

Patent document US2018/145294A1 discloses a battery module and a battery pack including the battery module. The battery module includes a plurality of pouch-type secondary batteries respectively configured to accommodate an electrode assembly in a pouch thereof so that an electrode lead connected to an electrode tab of the electrode assembly is drawn through a terrace portion of the pouch, and a fixing member interposed at least partially between the secondary batteries and adhered and fixed to the terrace portion to maintain the secondary batteries in a stacked state.

Patent document US2015/311486A1 discloses a battery pack, which includes: a case including a cavity; a core pack that inserts into the cavity and includes a plurality of batteries; a first cover coupled to a side of the case; and a second cover coupled to the other side of the case. The case further includes a plurality of guide grooves formed in inner corners of the case and extending in a length direction of the case, and the core pack further includes a plurality of ridges that respectively slide into the guide grooves in the length direction of the case.

Patent document US2017/214011A1 discloses a battery pack, which includes, among other things, an enclosure and a battery assembly retained relative to the enclosure. One of the battery assembly and the enclosure includes a groove configured to receive a flange of the other of the battery assembly and the enclosure as the battery assembly is slid into engagement with the enclosure.

### SUMMARY

The embodiments of the present disclosure provides a battery module, which can effectively avoid the secondary batteries to be worn when being grouped, and meanwhile can ensure the grouping efficiency of the battery module.

On one aspect, the embodiments of the present disclosure provide a battery module comprising: a case having a hollow cavity and an opening in communication with the hollow cavity in a length direction; a secondary battery assembly disposed in the hollow cavity and comprising two or more secondary batteries stacked one on another in a width direction; and a shielding member disposed on at least one side of the secondary battery assembly in a height direction and located between the secondary battery assembly and the case, the shielding member is configured to cover the secondary battery assembly and is slidably connected to the case, wherein the battery module further comprises a wire harness spacer disposed at the opening and detachably connected to the shielding member.

According to one aspect of the embodiments of the present disclosure, one of the shielding member and the case is provided with a guide groove, and the other is provided with a slide block slidably engaged with the guide groove, and both the guide groove and the slide block are configured to extend in the length direction.

According to one aspect of the embodiments of the present disclosure, the guide groove is disposed on a surface of the case facing the secondary battery assembly and is configured to extend across the entire case in the length direction, and the slide block is located on a surface of the shielding member facing the case and has a length the same as that of the shielding member in the length direction.

According to one aspect of the embodiments of the present disclosure, the case has a first plate and a second plate disposed opposite to each other in the height direction, and the shielding member is located between the first plate and the secondary battery assembly.

According to one aspect of the embodiments of the present disclosure, the battery module further comprises a heat conduction member disposed between the second plate and the secondary battery assembly.

According to one aspect of the embodiments of the present disclosure, the heat conduction member is a thermal conductive adhesive, and the second plate is provided with an adhesive injection hole which penetrates the second plate in the height direction and is adapted for injecting the adhesive in a liquid state into the hollow cavity.

According to one aspect of the embodiments of the present disclosure, there are two or more slide blocks spaced apart from each other in the width direction, and the number of the guide grooves is not less than the number of the slide blocks, wherein each of the slide blocks is disposed opposite to and slidably connected to one of the guide grooves.

According to one aspect of the embodiments of the present disclosure, the shielding member is provided with a through hole which penetrates the shielding member in the height direction.

According to one aspect of the embodiments of the present disclosure, there is one through hole, which is formed into a strip-shaped hole extending in the length direction; or there are two or more through holes, which are spaced apart from each other in the length direction.

According to one aspect of the embodiments of the present disclosure, the shielding member is formed as an insulating member; and/or the entire shielding member is formed as a plate-like member.

According to one aspect of the embodiments of the present disclosure, the battery module further comprises a snap joint, by which the wire harness spacer and the shielding member are detachably connected to each other, and the snap joint comprises a first snap and a second snap that are snap-fitted to each other, the first snap is connected to one of the shielding member and the wire harness spacer, and the second snap is connected to the other one.

According to one aspect of the embodiments of the present disclosure, the first snap comprises a column body extending in the width direction and two or more connecting blocks disposed on the column body and spaced apart from each other in the width direction, a slot is formed between two adjacent connecting blocks; and the second snap has a claw, the number of the claws are the same as the number of the slots, the claw has a clamping opening, and the claw is partially protruded into the slot and a wall portion for defining the clamping opening is fixedly snap-fitted to the column body.

The battery module provided by the present disclosure comprises a case, a secondary battery assembly and a shielding member, and the respective secondary batteries of the secondary battery assembly are disposed in a hollow cavity of the case. Since the shielding member is disposed on at least one side of the secondary battery assembly in a height direction, located between the secondary battery assembly and the case, covers the secondary battery assembly and is slidably connected to the case, when the secondary battery assembly is assembled, the shielding member can cover the secondary battery assembly, contact with the case and carry the secondary battery assembly to slide into the hollow cavity of the case. Thus, it can effectively avoid the respective second batteries from being worn with a simple operation, and also can reliably ensure the grouping efficiency of the battery module.

### BRIEF DESCRIPTION OF THE DRAWINGS

Features, advantages, and technical effects of exemplary embodiments of the present disclosure will be described below with reference to accompanying drawings.
Fig. 1 is a schematic view showing an overall configuration of a battery module according to an embodiment of the present disclosure.
Fig. 2 is a schematic view showing a configuration of a case according to an embodiment of the present disclosure.
Fig. 3 is a schematic view showing a shielding member engaged with a secondary battery assembly according to an embodiment of the present disclosure.
Fig. 4 is a schematic view showing an assembly of a battery module according to an embodiment of the present disclosure.
Fig. 5 is a schematic view showing a configuration of a shielding member according to an embodiment of the present disclosure.
Fig. 6 is a bottom view of a battery module according to an embodiment of the present disclosure.
Fig. 7 is a cross-section view taken along line A-A in Fig. 6.
Fig. 8 is a schematic view showing a configuration of a snap joint connected to a wire harness spacer and a shielding member according to an embodiment of the present disclosure.
Fig. 9 is an enlarged view of the part B in Fig. 8.
Fig. 10 is a schematic view showing a wire harness spacer and a shielding member being connected via a snap joint according to an embodiment of the present disclosure.

### Description of reference signs:

1-battery module; X-length direction; Y-width direction; Z-height direction;
10-case; 11-hollow cavity; 12-opening; 13-guide groove; 14-first plate; 15-second plate; 151-adhesive injection hole; 16-side plate;
20-secondary battery assembly, 21-secondary battery;
30-end plate;
40-shileding member; 41-slide block; 42-through hole;
50-wire harness spacer;
60-snap joint; 61-first snap; 611-column body; 612-connecting block; 613-slot; 62-second snap; 621-claw; 621a-clamping opening;
70-output pole mount;
80-output pole; and
90-heat conduction member.

In the drawings, same components are indicated with the same reference numbers. The drawings are not drawn to an actual scale.

### DETAILED DESCRIPTION

Features and exemplary embodiments of various aspects of the present disclosure will be described in detail below. In the following detailed description, numerous specific details are set forth to provide a full understanding of the present invention. However, it will be apparent to the person skilled in the art that the present invention may be practiced without some of the details. The following description of the embodiments is merely made to provide a better understanding of the invention by showing examples of the invention. In the figures and the following description, at least some of the known structures and techniques are not shown to avoid unnecessarily obscuring the present invention; and, for clarity, the size of a portion of the structure may be exaggerated. Furthermore, the features, structures, or characteristics described hereinafter may be combined in any suitable manner into one or more embodiments.

The orientations in the following description refers to the directions as shown in the figures, and are not intended to define the specific structure of the battery module of the present invention. In the description of the present disclosure, it should be noted that, unless otherwise stated, the terms "installation", "connected to", and "connected with" are to be understood broadly, and may be, for example, a fixed connection, a disassemble connection, or an integral connection; they can be connected directly or indirectly through an intermediate medium. The specific meaning of the above terms in the present disclosure can be understood by the person skilled in the art according to actual circumstance.

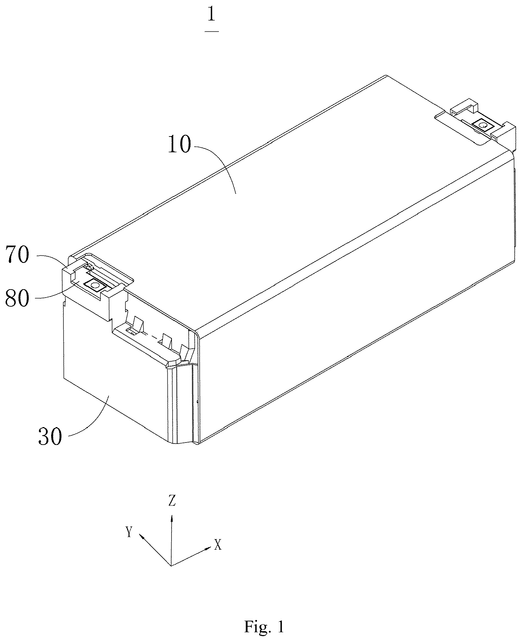

In order for better understanding of the present disclosure, a battery module according to the embodiments of the present disclosure will be described in detail below with reference to Figs. 1-10.

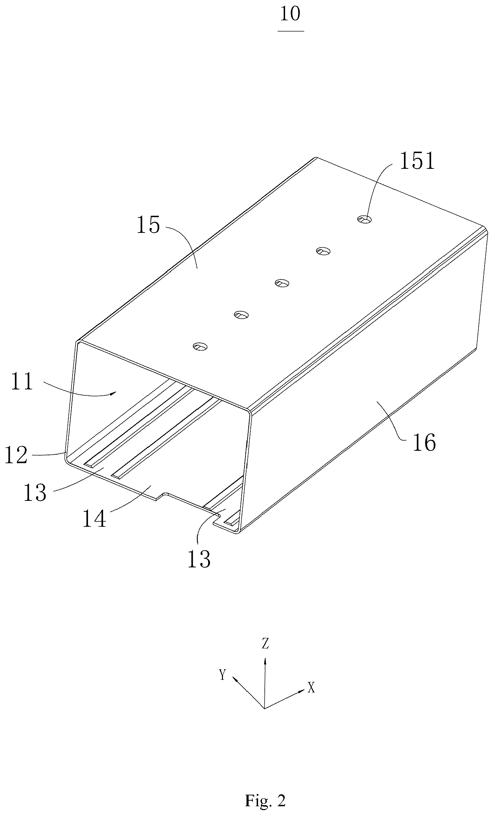

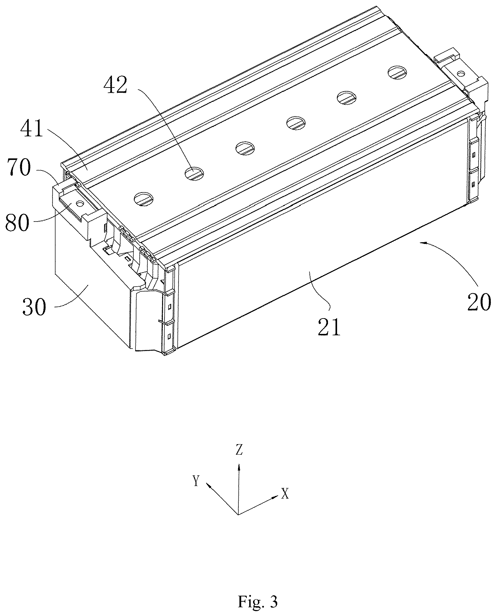

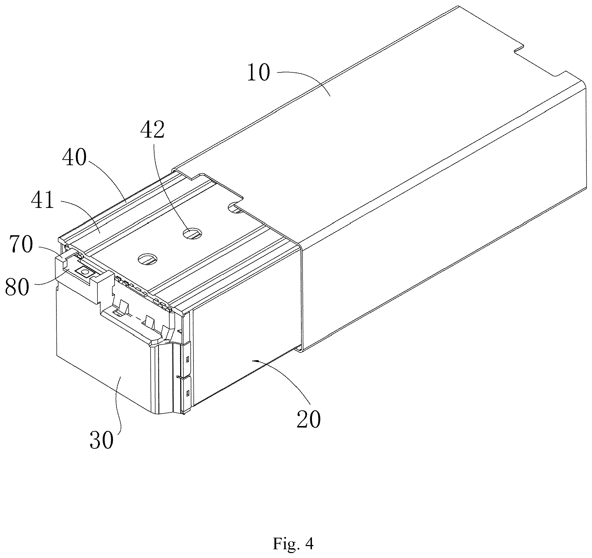

Referring to Figs. 1-4, Fig. 1 is a schematic view showing an overall configuration of a battery module according to an embodiment of the present disclosure; Fig. 2 is a schematic view showing a configuration of a case according to an embodiment of the present disclosure; Fig. 3 is a schematic view showing a shielding member engaged with a secondary battery assembly according to an embodiment of the present disclosure, and Fig. 4 is a schematic view showing an assembly of a battery module according to an embodiment of the present disclosure.

The embodiments of the present disclosure provide a battery module 1, which mainly includes a case 10, a secondary battery assembly 20, an end plate 30, a shielding member 40, etc.

As shown in Fig. 2, the case 10 has a hollow cavity 11 and an opening 12 in communication with the hollow cavity 11 in a length direction X. There may be only one opening 12, or two openings 12, of course. In a specific implementation, the case 10 may be formed as an integrated box-shaped member, with first and second plates 14, 15 opposite to each other in a height direction Z and two side plates 16 opposite to each other in a width direction Y. Each of the two side plates 16 is connected to the first plate 14 and the second plate 15 at both ends in the height direction Z.

The secondary battery assembly 20 can be disposed in the hollow cavity 11 of the case 10. The secondary battery assembly 20 includes two or more secondary batteries 21 stacked one on another in the width direction Y. The number of the secondary batteries 21 is not particularly limited, and can be set according to electrical requirements of the battery module 1.

The secondary battery 21 used in the secondary battery assembly 20 provided by the embodiments of the present disclosure may include a housing, an electrode assembly and an electrode lead, and the electrode lead specifically includes a first electrode lead and a second electrode lead having opposite polarities. The electrode assembly is mounted inside the housing, and the electrode assembly is formed by stacking a first electrode plate, a separator and a second electrode plate. The first electrode plate is electrically connected to the first electrode lead, and the second electrode plate is electrically connected to the second electrode lead. An end of the first electrode lead away from the first electrode plate extends out of the housing, and an end of the second electrode lead away from the second electrode plate extends out of the housing. The portions of the first electrode lead and of the second electrode lead that are held by the housing are in sealed connection with the housing by a sealant. The electrode assembly is completely sealed within an inner cavity of the housing by thermal welding. The portion of the first electrode lead extending out of the housing may be disposed opposite one of the openings 12 of the case 10 in the battery module 1, and the portion of the second electrode lead extending out of the housing may be disposed opposite the other opening 12 of the case 10.

The secondary battery assembly 20 is provided with a shielding member 40 on at least one side in the height direction Z. The shielding member 40 is located between the secondary battery assembly 20 and the case 10, and is configured to cover the secondary battery assembly 20 and is slidably connected with the case 10.

The number of the end plates 30 can be the same as the number of the openings 12, and each of the openings 12 is provided with one end plate 30. The end plate 30 is adapted to covering a corresponding one of the openings 12 and interconnecting with the case 10. An output pole mount 70 for mounting an output pole 80 of the battery module 1 is provided on the end plate 30, and each output pole 80 is electrically connected to the secondary battery assembly 20.

When assembling the battery module 1 according to the embodiments of the present disclosure, the shielding member 40 covers the secondary battery assembly 20 and carries the secondary battery assembly 20 to slide into the hollow cavity 11 of the case 10. Since the shielding member 40 is located between the secondary battery assembly 20 and the case 10, when the secondary battery assembly 20 is assembled into the hollow cavity 11, a contact between the secondary battery assembly 20 and the case 10 can be prevented, which can effectively prevent the respective secondary batteries 21 from being worn with a simple operation, and also can reliably ensure a grouping efficiency of the battery module 1.

In some optional examples, the entire shielding member 40 can be formed as a plate-like member. In order to reliably protect the secondary battery assembly 20, optionally, the shielding member 40 may be formed as a rectangular plate-like member. The plate-like member of other shapes also can be used for the shielding member 40, as long as the protection requirements for the secondary battery assembly 20 can be satisfied and the assembly between the secondary battery assembly 20 and the case 10 can be facilitated.

In a specific implementation, the shielding member 40 can be formed as an insulating member, which can reliably ensure the safety of the battery module 1 during service. Of course, the insulating member can be a member entirely made of an insulating material, and also can be a member in which part or all of an outer surface is covered with an insulating material, as long as the insulation requirements between the secondary battery assembly 20 and the case 10 can be satisfied.

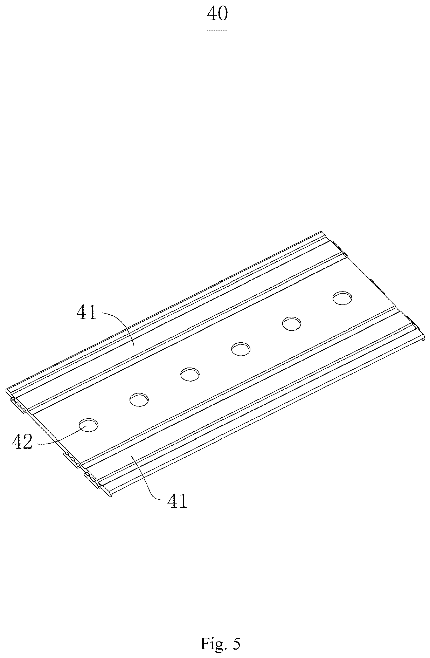

Further referring to Fig. 5 together, Fig. 5 is a schematic view showing a configuration of the shielding member 40 according to an embodiment of the present disclosure. In order to enable the shielding member 40 to better carry the secondary battery assembly 20 into the hollow cavity 11 of the case 10, as an optional embodiment, a guide groove 13 can be provided on the case 10. Specifically, a guide groove 13 is disposed on the first plate 14 of the case 10, and a slide block 41, which can be slidably engaged with the guide groove 13, is disposed on the shielding member 40, wherein both the guide groove 13 and the slide block 41 extend in the length direction X. By providing the guide groove 13 and the slide block 41, the shielding member 40 can be guided by the guide groove 13 and the slide block 41 when being assembled into the hollow cavity 11 of the case 10, which can prevent the shielding member 40 from colliding with or being stuck by the inside of the case 10 when travelling in the length direction X.

In order for a better engagement of the slide block 41 and the guide groove 13, optionally, the guide groove 13 extends across the entire case 10 in the length direction X, and the slide block 41 is located on a surface of the shielding member 40 facing the case 10 and has a length the same as that of the shielding member 40 in the length direction X. Meanwhile, in a specific implementation, the slide block 41 can have a cross-section in a shape of isosceles trapezoid, to facilitate positioning and sliding connection between the slide block 41 and the corresponding guide groove 13.

In a specific implementation, there are two or more slide blocks 41 which are spaced apart from each other in the width direction Y. The number of the guide grooves 13 is not less than the number of the slide blocks 41, and each of the slide blocks 41 is disposed opposite and is slidably connected to one of the guide grooves 13. By setting two or more slide blocks 41 and two or more guide grooves 13, the guiding requirements of the shielding member 40 can be better satisfied, so that the shielding member 40 can reliably carry the secondary battery assembly 20 into the hollow cavity 11 of the case 10, and meanwhile prevent the secondary batteries 21 of the secondary battery assembly 20 from being scratched.

Optionally, the number of the slide blocks 41 can be same as the number of the guide grooves 13, and the slide blocks 41 and the guide grooves 13 can be arranged one by one correspondingly. In some examples, there are two slide blocks and correspondingly, there are two guide grooves 13. Of course, the number of the slide blocks 41 and the number of the guide grooves 13 are not limited to two, and may be three, four or even more, and specifically, can be set according to size specifications of the case 10 and the shielding member 40.

In the above examples, the slide block 41 is disposed on the shielding member 40, and the guide groove 13 is disposed on the case 10. It shall be understood that, in some other examples, the guide groove 13 can be disposed on the shielding member 40, while the slide block 41 is disposed on the case 10, which also can satisfy the guiding requirements of the shielding member 40, and facilitate an overall installation of the shielding member 40 and the secondary battery assembly 20.

As an optional embodiment, the shielding member 40 is provided with a through hole 42 that penetrates the shielding member 40 in the height direction Z. By providing the through hole 42, a gap between the case 10 and the shielding member 40 can be communicated with the outside, and a compressed gas between the case 10 and the shielding member 40 can be exhausted. As a result, the compressed gas will not cause any difficulty for the assembly of the shielding member 40 and the case 10 when the shielding member 40 is pushed into the hollow cavity 11 of the case 10.

The through hole 42 can be formed in different shapes, and the number of the through holes 42 can be set according to the shape thereof. As some optional examples, there may be one through hole 42, which can be formed into a strip-shaped hole extending in the length direction X, and the strip-shaped hole may be a rectangular hole, a waist hole, an elliptical hole or a hole in other shapes. Of course, in some other examples, there are two or more through holes 42, which are space apart from each other in the length direction X. in this case, the through hole 42 can be formed as a circular hole, an elliptical hole or a polygonal hole, as long as the requirement of the exhaust of the gas can be satisfied.

The through hole 42 may be located at different positions of the shielding member 40. In order to ensure uniformity of the strength of the shielding member 40, optionally, the through hole 42 may be located at or near a central position of the shielding member 40 in the width direction Y.

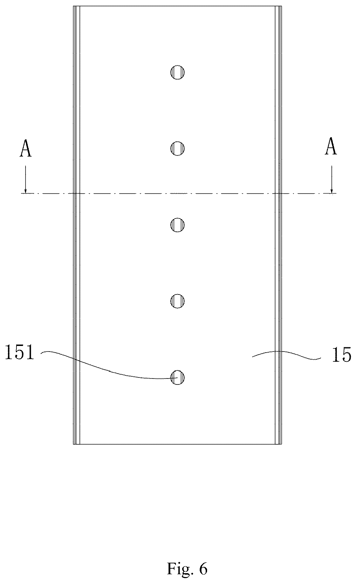

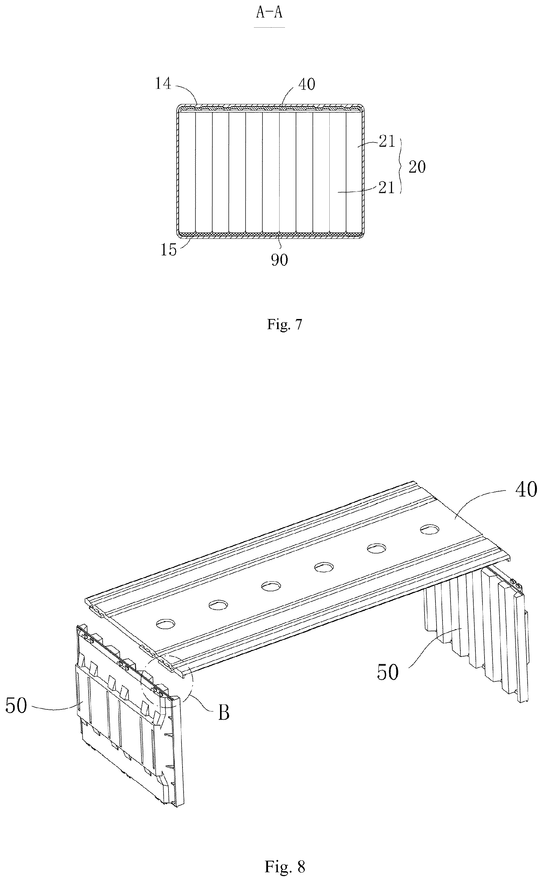

Referring to Fig. 6 and Fig. 7 together, Fig. 6 is a bottom view of the battery module 1 according to an embodiment of the present disclosure, and Fig. 7 is a cross-sectional view taken along line A-A in Fig. 6. In order to better optimize the performance of the battery module 1 and ensure the safety performance of the battery module 1 during service, optionally, the battery module 1 further includes a heat conduction member 90 which is disposed between the second plate 15 and the secondary battery assembly 20. By providing the heat conduction member 90, heat generated by each secondary battery 21 in the secondary battery assembly 20 during charging and discharging thereof can be timely transferred to the second plate 15 of the case 10 by the heat conduction member 90, so as to satisfy the heat dissipation requirement of the secondary batteries 21 and avoid the risk that the secondary batteries 21 are burnt out and even that the battery module 1 is exploded due to overheating of the secondary batteries 21.

The heat conduction member 90 can be formed in a variety of configurations, and in some optional examples, the heat conduction member 90 can be a thermal conductive adhesive. In order to facilitate the arrangement of the heat conduction member 90, optionally, the second plate 15 can be provided with an adhesive injection hole 151, which penetrates the second plate 15 in the height direction Z and is adapted to injecting the adhesive in a liquid state into the hollow cavity 11. The liquid adhesive injected into the hollow cavity 11 via the adhesive injection hole 151 can be solidified to form the heat conduction member 90.

As an optional embodiment, the battery module 1 according to an embodiment of the present disclosure further includes a wire harness spacer 50, which is disposed on the opening 12, detachably connected to the shielding member 40, and is located between the secondary battery assembly 20 and the end plate 30. By detachably connecting the wire harness spacer 50 with the shielding member 40, an integral assembly of the wire harness spacer 50 and the shielding member 40 to the secondary battery assembly 20 can be realized, which can further improve the grouping efficiency of the battery module 1.

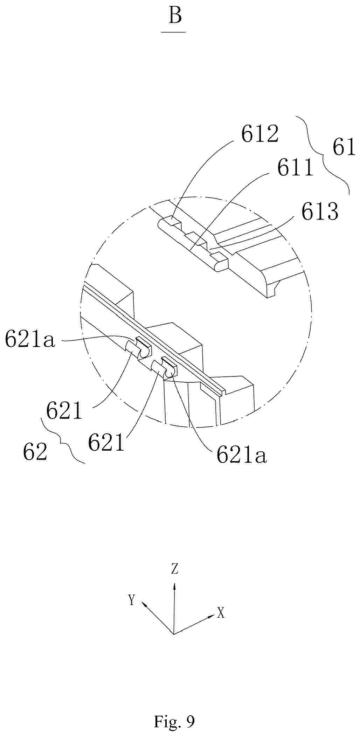

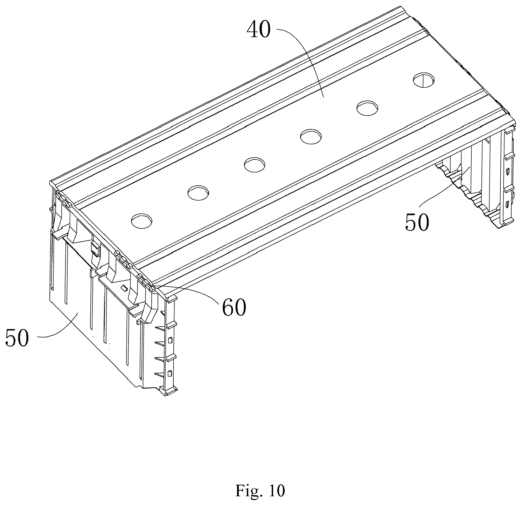

Referring to Fig. 8, Fig. 9 and Fig. 10 together, Fig. 8 is a schematic view showing a configuration of a snap joint 60 connected to the wire harness spacer 50 and the shielding member 40 according to an embodiment of the present disclosure, Fig. 9 shows an enlarged view of the part B in Fig. 8, and Fig. 10 shows a schematic view of the wire harness spacer 50 and the shielding member 40 connected with each other by the snap joint 60 according to an embodiment of the present disclosure. In order to better satisfy the detachable connection requirements between the wire harness spacer 50 and the shielding member 40, and to ensure the connection strength between the two members, optionally, the battery module 1 further includes the snap joint 60, by which the wire harness spacer 50 and the shielding member 40 are detachably connected with each other. The snap joint 60 comprises a first snap 61 and a second snap 62 that are snap-fitted to each other. The first snap 61 is connected to the shielding member 40 and the second snap 62 is connected to the wire harness spacer 50.

As an optional implementation, the first snap 61 may include a column body 611 extending in the width direction Y and two or more connecting blocks 612 disposed on the column body 611 and spaced apart from each other in the width direction Y, wherein a slot 613 is formed between two adjacent connecting blocks 612. The second snap 62 includes a claw 621, and the number of the claws 621 is the same as the number of the slots 613. The claw 621 has a clamping opening 621a. The claw 621 partially protrudes into the slot 613 and is fixedly snap-fitted to the column body 611 by a wall portion for defining the clamping opening 621a. With the above configuration, the first snap 61 and the second snap 62 can ensure the connection strength between the wire harness spacer 50 and the shielding member 40, and also make the connection of the both to be more convenient.

In a specific implementation, the number of the first snaps 61 may be set according to the connection requirements, and there may be one or more first snaps 61. In the case that there are two or more first snaps 61, the first snaps 61 are spaced apart from each other in the width direction Y. Similarly, the number of the second snaps 62 can be set to be the same as the number of the first snaps 61.

Meanwhile, each of the first snaps 61 may include two, three or more connecting blocks 612, and the number of the claws 621 included in each second snap 62 shall be the same as the number of the slots 613 in the corresponding first snap 61.

It shall be understood that the first snap 61 is not limited to being disposed on the shielding member 40, and the second snap 62 is not limited to being disposed on the wire harness spacer 50. In some other examples, the first snap 61 may be disposed on the wire harness spacer 50 while the second snap 61 is disposed on the shielding member 40, which also can satisfy the connection requirements between the shielding member 40 and the wire harness spacer 50.

In the battery module 1 provided by any embodiment of the present disclosure as described above, the shielding member 40 is disposed between the secondary battery 21 and the first plate 14 of the case 10, that is, the shielding member 40 is disposed at one side of the secondary battery assembly 20 in the height direction Z. With such configuration, the battery module 1 can be assembled with a manner as follows: disposing the case 10 with the first plate 14 at a lower position; stacking the shielding member 40 and the secondary battery assembly 20 in the height direction Z with the shielding member 40 located below the secondary battery assembly 20; connecting the wire harness spacer 50 with the shielding member 40 by the snap joint 60 to form an integrity; and then pushing an integrity consisting of the shielding member 40, the secondary battery assembly 20 and the wire harness spacer 50 into the hollow cavity 11 of the case 10 in the length direction X. When pushing the integrity consisting of the shielding member 40, the secondary battery assembly 20 and the wire harness spacer 50 into the inside of the case 10, a predetermined distance is left between the secondary battery assembly 20 and the second plate 15. The adhesive can be injected into the hollow cavity 11 via the adhesive injection hole 151. The adhesive injected into the hollow cavity 11 is blocked by the secondary battery assembly 20, and thus is concentrated in the gap between the secondary battery assembly 20 and the second plate 15, and then can be solidified to form the heat conduction member 90.

Since it is the shielding member 40 which contacts with the inside surface of the case 10 when the integrity consisting of the shielding member 40, the secondary battery assembly 20 and the wire harness spacer 50 entering the inside of the case 10, and meanwhile a predetermined distance is left between the other end of the secondary battery assembly 20 and the second plate 15, the secondary batteries 21 cannot be scratched, and thus can be effectively prevented from being worn when being grouped. Meanwhile, such assembly manner makes the assembly of the battery module to be simpler, and thus can effectively improve the grouping efficiency of the battery module 1.

It shall be understood that, it is only an optional embodiment to provide the shielding member between the first plate 14 and the secondary battery assembly 20. In some other examples, a further shielding member 40 can be provided between the second plate 15 and the secondary battery assembly 20, that is, the shielding members 40 are disposed on both sides of the secondary battery assembly 20 in the height direction Z. In this case, the second plate 15 is provided with a guide groove 13 slidably engaged with the shielding member 40 as well. With the above configuration, the respective second batteries 21 can be protected better and avoided from being worn during the assembly of the battery module 1.

In the case that the shielding members 40 are provided on both sides of the secondary battery assembly 20 in the height direction Z, the through hole 42 in the shielding member 40 is not only used for the gas exhaust during the assembly, but also can be used for passing through of the liquid adhesive injected via the adhesive injection hole 151. As a result, the liquid adhesive can enter a gap between the shielding member 40 and the secondary battery assembly 20 to form a heat conduction member 90, so as to satisfy the heat conduction requirement for the secondary battery assembly 20.

In summary, the battery module 1 provided by the present disclosure comprises a case 10, a secondary battery assembly 20 and a shielding member 40, and the respective secondary batteries of the secondary battery assembly 20 are disposed in a hollow cavity 11 of the case 10. Since the shielding member 40 is disposed on at least one side of the secondary battery assembly 20 in a height direction Z, located between the secondary battery assembly 20 and the case 10, covers the secondary battery assembly 20 and is slidably connected to the case 10, when the secondary battery assembly 20 is assembled, the shielding member 40 can cover the secondary battery assembly 20, contact with the case 10 and carry the secondary battery assembly 20 to slide into the hollow cavity 11 of the case 10. As a result, the respective second batteries 21 can be effectively prevented from being worn with a simple operation, and the grouping efficiency of the battery module 1 can be effectively ensured. Therefore, it is easy to promote and use the battery module of the present disclosure.

## Claims

1. A battery module (1), **characterized in that**, comprising:
a case (10) having a hollow cavity (11) and an opening (12) in communication with the hollow cavity (11) in a length direction (X);
a secondary battery assembly (20) disposed in the hollow cavity (11) and comprising two or more secondary batteries (21) stacked one on another in a width direction (Y); and
a shielding member (40) disposed on at least one side of the secondary battery assembly (20) in a height direction (Z) and located between the secondary battery assembly (20) and the case (10), wherein the shielding member (40) is configured to cover the secondary battery assembly (20) and is slidably connected to the case (10),
wherein the battery module (1) further comprises a wire harness spacer (50) disposed at the opening (12) and detachably connected to the shielding member (40).

2. The battery module (1) according to claim 1, **characterized in that**, one of the shielding member (40) and the case (10) is provided with a guide groove (13), and the other is provided with a slide block (41) slidably engaged with the guide groove (13), and both the guide groove (13) and the slide block (41) are configured to extend in the length direction (X).

3. The battery module (1) according to claim 2, **characterized in that**, the guide groove (13) is disposed on a surface of the case (10) facing the secondary battery assembly (20) and is configured to extend across the entire case (10) in the length direction (X), and the slide block (41) is located on a surface of the shielding member (40) facing the case (10) and has a length the same as that of the shielding member (40) in the length direction (X).

4. The battery module (1) according to claim 3, **characterized in that**, the case (10) has a first plate (14) and a second plate (15) disposed opposite to each other in the height direction (Z), and the shielding member (40) is located between the first plate (14) and the secondary battery assembly (20).

5. The battery module (1) according to claim 4, **characterized in that**, the battery module (1) further comprises a heat conduction member disposed between the second plate (15) and the secondary battery assembly (20).

6. The battery module (1) according to claim 5, **characterized in that**, the heat conduction member is a thermal conductive adhesive, and the second plate (15) is provided with an adhesive injection hole (151) which penetrates the second plate (15) in the height direction (Z) and is adapted for injecting the adhesive in a liquid state into the hollow cavity (11).

7. The battery module (1) according to claim 2, **characterized in that**, there are two or more slide blocks (41) spaced apart from each other in the width direction (Y), and the number of the guide grooves (13) is not less than the number of the slide blocks (41), wherein each of the slide blocks (41) is disposed opposite to and slidably connected to one of the guide grooves (13).

8. The battery module (1) according to any one of claims 1 to 7, **characterized in that**, the shielding member (40) is provided with a through hole (42) which penetrates the shielding member (40) in the height direction (Z).

9. The battery module (1) according to claim 8, **characterized in that**, there is one through hole (42), which is formed into a strip-shaped hole extending in the length direction (X); or
there are two or more through holes (42), which are spaced apart from each other in the length direction (X).

10. The battery module (1) according to any one of claims 1 to 7, **characterized in that**, the shielding member (40) is formed as an insulating member; and/or the entire shielding member (40) is formed as a plate-like member.

11. The battery module (1) according to claim 1, **characterized in that**, the battery module (1) further comprises a snap joint (60), by which the wire harness spacer (50) and the shielding member (40) are detachably connected to each other, and the snap joint (60) comprises a first snap (61) and a second snap (62) that are snap-fitted to each other, the first snap (61) is connected to one of the shielding member (40) and the wire harness spacer (50), and the second snap (62) is connected to the other one.

12. The battery module (1) according to claim 11, **characterized in that**, the first snap (61) comprises a column body (611) extending in the width direction (Y) and two or more connecting blocks (612) disposed on the column body (611) and spaced apart from each other in the width direction (Y), a slot (613) is formed between two adjacent connecting blocks (612); and
the second snap (62) has a claw (621), the number of which is the same as the number of the slots (613), and the claw (621) has a clamping opening (621a), the claw (621) is partially protruded into the slot (613) and a wall portion for defining the clamping opening (621a) is fixedly snap-fitted to the column body (611).

## Patentansprüche

1. Ein Batteriemodul (1), **dadurch gekennzeichnet, dass** es umfasst:
einen Gehäuse (10) mit einem Hohlraum (11) und einer Öffnung (12) in Verbindung mit dem Hohlraum (11) in einer Längenrichtung (X);
eine Sekundärbatterieanordnung (20), die in dem Hohlraum (11) angeordnet ist und zwei oder mehr Sekundärbatterien (21) umfasst, die in einer Breitenrichtung (Y) übereinander gestapelt sind; und
ein Abschirmelement (40), das auf mindestens einer Seite der Sekundärbatterieanordnung (20) in einer Höhenrichtung (Z) angeordnet ist und sich zwischen der Sekundärbatterieanordnung (20) und dem Gehäuse (10) befindet, wobei das Abschirmelement (40) konfiguriert ist, um die Sekundärbatterieanordnung (20) abzudecken und verschiebbar mit dem Gehäuse (10) verbunden ist,
wobei das Batteriemodul (1) ferner einen Kabelbaumabstandshalter (50) umfasst, der an der Öffnung (12) angeordnet und abnehmbar mit dem Abschirmelement (40) verbunden ist.

2. Das Batteriemodul (1) nach Anspruch 1, **dadurch gekennzeichnet, dass** eines des Abschirmelements (40) und des Gehäuses (10) mit einer Führungsnut (13) versehen ist, und das andere mit einem Gleitblock (41) versehen ist, der verschiebbar mit der Führungsnut (13) in Eingriff steht, und die Führungsnut (13) und der Gleitblock (41) so konfiguriert sind, dass sie sich in der Längenrichtung (X) erstrecken.

3. Das Batteriemodul (1) nach Anspruch 2, **dadurch gekennzeichnet, dass** die Führungsnut (13) auf einer der Sekundärbatterieanordnung (20) zugewandten Oberfläche des Gehäuses (10) angeordnet ist, und so konfiguriert ist, dass sie sich in der Längenrichtung (X) über das gesamte Gehäuse (10) erstreckt, und dass sich der Gleitblock (41) auf einer dem Gehäuse (10) zugewandten Oberfläche des Abschirmelements (40) befindet und eine Länge in der Längenrichtung (X) gleich wie die des Abschirmelements (40) aufweist.

4. Das Batteriemodul (1) nach Anspruch 3, **dadurch gekennzeichnet, dass** das Gehäuse (10) eine erste Platte (14) und eine zweite Platte (15) aufweist, die in der Höhenrichtung (Z) gegenüberliegend angeordnet sind, wobei sich das Abschirmelement (40) zwischen der ersten Platte (14) und der Sekundärbatterieanordnung (20) befindet.

5. Das Batteriemodul (1) nach Anspruch 4, **dadurch gekennzeichnet, dass** das Batteriemodul (1) ferner ein Wärmeleitungselement umfasst, das zwischen der zweiten Platte (15) und der Sekundärbatterieanordnung (20) angeordnet ist.

6. Das Batteriemodul (1) nach Anspruch 5, **dadurch gekennzeichnet, dass** das Wärmeleitungselement ein wärmeleitender Klebstoff ist, und die zweite Platte (15) mit einem Klebstoffinjektionsloch (151) versehen ist, das die zweite Platte (15) in der Höhenrichtung (Z) durchdringt und zum Einspritzen des Klebstoffs in flüssigem Zustand in den Hohlraum (11) geeignet ist.

7. Das Batteriemodul (1) nach Anspruch 2, **dadurch gekennzeichnet, dass** die Anzahl der Gleitblöcke (41) zwei oder mehr beträgt, wobei die Gleitblöcke in der Breitenrichtung (Y) voneinander beabstandet sind, und die Anzahl der Führungsnuten (13) nicht geringer als die Anzahl der Gleitblöcke (41) ist, wobei jeder von der Gleitblöcke (41) gegenüber einer der Führungsnuten (13) angeordnet und verschiebbar mit diesen verbunden sind.

8. Das Batteriemodul (1) nach einem der Ansprüche 1 bis 7, **dadurch gekennzeichnet, dass** das Abschirmelement (40) mit einem Durchgangsloch (42) versehen ist, das das Abschirmelement (40) in der Höhenrichtung (Z) durchdringt.

9. Das Batteriemodul (1) nach Anspruch 8, **dadurch gekennzeichnet, dass**
die Anzahl des Durchgangsloches (42) eins beträgt, wobei das Durchgangsloch (42) ein sich entlang der Längenrichtung (X) erstreckendes Streifenloch ist; oder
die Anzahl der Durchgangslöcher (42) zwei oder mehr beträgt, wobei die Durchgangslöcher in der Längenrichtung (X) voneinander beabstandet sind.

10. Das Batteriemodul (1) nach einem der Ansprüche 1 bis 7, **dadurch gekennzeichnet, dass** das Abschirmelement (40) als ein Isolierelement ausgebildet ist; und / oder das gesamte Abschirmelement (40) als ein plattenartiges Element ausgebildet ist.

11. Das Batteriemodul (1) nach Anspruch 1, **dadurch gekennzeichnet, dass** das Batteriemodul (1) ferner eine Schnappverbindung (60) umfasst, durch die der Kabelbaumabstandshalter (50) und das Abschirmelement (40) lösbar miteinander verbunden sind, und die Schnappverbindung (60) einen ersten Schnappverschluss (61) und einen zweiten Schnappverschluss (62) umfasst, die miteinander geschnappt sind, wobei der erste Schnappverschluss (61) mit einem des Abschirmelements (40) und des Kabelbaumabstandshalters (50) verbunden ist und der zweite Schnappverschluss (62) mit dem anderen verbunden ist.

12. Das Batteriemodul (1) nach Anspruch 11, **dadurch gekennzeichnet, dass**
der erste Schnappverschluss (61) einen Säulenkörper (611), der sich in der Breitenrichtung (Y) erstreckt, zwei oder mehr Verbindungsblöcke (612), die auf dem Säulenkörper (611) angeordnet und in der Breitenrichtung (Y) voneinander beabstandet sind, und einen Schlitz (613), der zwischen zwei benachbarten Verbindungsblöcken (612) ausgebildet ist, umfasst; und
der zweite Schnappverschluss (62) eine Klaue (621) aufweist, deren Anzahl der Anzahl der Schlitze (613) entspricht, wobei die Klaue (621) eine Klemmöffnung (621a) aufweist und die Klaue (621) teilweise in den Schlitz (613) hineinragt, wobei ein Wandabschnitt zum Definieren der Klemmöffnung (621a) fest mit dem Säulenkörper (611) verbunden ist.

## Revendications

1. Module de batterie (1), **caractérisé en ce qu'**il comprend :
un boîtier (10) présentant une cavité creuse (11) et une ouverture (12) en communication avec la cavité creuse (11) dans un sens de la longueur (X) ;
un ensemble de batteries secondaires (20) disposé dans la cavité creuse (11) et comprenant deux batteries secondaires (21) ou plus empilées les unes sur les autres dans un sens de la largeur (Y) ; et
un élément de blindage (40) disposé sur au moins un côté de l'ensemble de batteries secondaires (20) dans un sens de la hauteur (Z) et situé entre l'ensemble de batteries secondaires (20) et le boîtier (10), dans lequel l'élément de blindage (40) est configuré pour couvrir l'ensemble de batteries secondaires (20) et est relié de manière coulissante au boîtier (10),
dans lequel le module de batterie (1) comprend en outre un élément d'espacement de harnais de câblage (50) disposé au niveau de l'ouverture (12) et relié de manière détachable à l'élément de blindage (40).

2. Module de batterie (1) selon la revendication 1, **caractérisé en ce que** l'un de l'élément de blindage (40) et du boîtier (10) est pourvu d'une rainure de guidage (13), et l'autre est pourvu d'un bloc coulissant (41) en prise de manière coulissante avec la rainure de guidage (13), et à la fois la rainure de guidage (13) et le bloc coulissant (41) sont configurés pour s'étendre dans le sens de la longueur (X).

3. Module de batterie (1) selon la revendication 2, **caractérisé en ce que** la rainure de guidage (13) est disposée sur une surface du boîtier (10) faisant face à l'ensemble de batteries secondaires (20) et est configurée pour s'étendre à travers la totalité du boîtier (10) dans le sens de la longueur (X), et le bloc coulissant (41) est situé sur une surface de l'élément de blindage (40) faisant face au boîtier (10) et présente une longueur identique à celle de l'élément de blindage (40) dans le sens de la longueur (X).

4. Module de batterie (1) selon la revendication 3, **caractérisé en ce que** le boîtier (10) présente une première plaque (14) et une seconde plaque (15) disposées à l'opposé l'une de l'autre dans le sens de la hauteur (Z), et l'élément de blindage (40) est situé entre la première plaque (14) et l'ensemble de batteries secondaires (20).

5. Module de batterie (1) selon la revendication 4, **caractérisé en ce que** le module de batterie (1) comprend en outre un élément conducteur de chaleur disposé entre la seconde plaque (15) et l'ensemble de batteries secondaires (20).

6. Module de batterie (1) selon la revendication 5, **caractérisé en ce que** l'élément conducteur de chaleur est un adhésif thermoconducteur, et la seconde plaque (15) est pourvue d'un trou d'injection d'adhésif (151) qui pénètre dans la seconde plaque (15) dans le sens de la hauteur (Z) et est adapté pour injecter l'adhésif dans un état liquide dans la cavité creuse (11).

7. Module de batterie (1) selon la revendication 2, **caractérisé en ce qu'**il existe deux blocs coulissants (41) ou plus espacés les uns des autres dans le sens de la largeur (Y), et le nombre de rainures de guidage (13) n'est pas inférieur au nombre des blocs coulissants (41), dans lequel chacun des blocs coulissants (41) est disposé à l'opposé d'une des rainures de guidage (13) et relié de manière coulissante à celle-ci.

8. Module de batterie (1) selon l'une quelconque des revendications 1 à 7, **caractérisé en ce que** l'élément de blindage (40) est pourvu d'un trou traversant (42) qui pénètre dans l'élément de blindage (40) dans le sens de la hauteur (Z).

9. Module de batterie (1) selon la revendication 8, **caractérisé en ce qu'**il existe un seul trou traversant (42), qui est formé dans un trou en forme de bande s'étendant dans le sens de la longueur (X) ; ou
il existe deux trous traversants (42) ou plus, qui sont espacés les uns des autres dans le sens de la longueur (X).

10. Module de batterie (1) selon l'une quelconque des revendications 1 à 7, **caractérisé en ce que** l'élément de blindage (40) est formé comme un élément isolant ; et/ou l'élément de blindage (40) dans sa totalité est formé comme un élément de type plaque.

11. Module de batterie (1) selon la revendication 1, **caractérisé en ce que** le module de batterie (1) comprend en outre une jonction à encliquetage (60), grâce à laquelle l'élément d'espacement de harnais de câblage (50) et l'élément de blindage (40) sont reliés de manière détachable l'un à l'autre, et la jonction à encliquetage (60) comprend un premier cliquet (61) et un second cliquet (62) qui sont encliquetés l'un avec l'autre, le premier cliquet (61) est relié à un de l'élément de blindage (40) et de l'élément d'espacement de harnais de câblage (50), et le second cliquet (62) est relié à l'autre d'entre eux.

12. Module de batterie (1) selon la revendication 11, **caractérisé en ce que** le premier cliquet (61) comprend un corps colonnaire (611) s'étendant dans le sens de la largeur (Y) et deux blocs de liaison (612) ou plus disposés sur le corps colonnaire (611) et espacés les uns des autres dans le sens de la largeur (Y), une fente (613) est formée entre deux blocs de liaison (612) adjacents ; et
le second cliquet (62) possède une griffe (621), dont le nombre est identique au nombre des fentes (613), et la griffe (621) possède une ouverture de serrage (621a), la griffe (621) est partiellement en saillie dans la fente (613) et une partie formant paroi destinée à définir l'ouverture de serrage (621a) est encliquetée de manière fixe dans le corps colonnaire (611).
